# EUROPÄISCHE PATENTSCHRIFT

(11) **EP 2 777 985 B1**
(45) Veröffentlichungstag und Bekanntmachung des Hinweises auf die Patenterteilung: **22.01.2020**
(21) Anmeldenummer: 13005512.2
(22) Anmeldetag: 27.11.2013
(51) Int. Cl.: B60Q 1/00, F21V 15/02

(54) **Scheinwerfer-Schutzgitter-Anordnung für ein Kraftfahrzeug**
Headlamp protection grille arrangement for a motor vehicle
Agencement de grille de protection pour phare pour un véhicule automobile

(30) Priorität: 11.03.2013 DE 102013004229
(43) Veröffentlichungstag der Anmeldung: 17.09.2014
(73) Patentinhaber: MAN Truck & Bus SE, 80995 München (DE)
(72) Erfinder: Braun, Christian, 85757 Karlsfeld (DE)
(74) Vertreter: v. Bezold & Partner Patentanwälte - PartG mbB

(56) Entgegenhaltungen:
- EP-A2- 0 212 176
- DE-U1-202006 017 131
- SU-A1- 1 364 513
- US-A- 1 910 779
- US-A- 5 062 675
- US-A1- 2012 250 340

## Beschreibung

Die Erfindung betrifft eine Scheinwerfer-Schutzgitter-Anordnung für ein Kraftfahrzeug, vorzugsweise ein Baustellenfahrzeug.

EP 0 212 176 A2 z. B. offenbart eine schwenkbare Leuchtenschutzvorrichtung für ein Kraftfarzeug, wobei zum Stand der Technik ferner auf die US 2012/0250340 A1 verwiesen wird. Es ist bekannt, die linken und rechten Scheinwerfer eines Baustellenfahrzeugs mit jeweils einem Scheinwerferschutzgitter auszustatten. Das Scheinwerferschutzgitter dient dazu, den dahinter angeordneten Scheinwerfer und die dazugehörige Scheinwerferabdeckung z. B. vor Steinschlag zu schützen. Die bekannten Scheinwerferschutzgitter sind straßenzugelassen (homologiert), um auf öffentlichen Straßen verwendet werden zu dürfen. Das wird dadurch realisiert, dass die Schutzgitterabstände relativ groß sind, was allerdings dazu führt, dass die bekannten Scheinwerferschutzgitter oft einen nur unzureichenden Scheinwerferschutz bieten und es somit trotz Scheinwerferschutzgitter zu Beschädigungen des dahinter angeordneten Scheinwerfers kommt.

Eine Aufgabe der Erfindung ist es, eine Möglichkeit zu schaffen, mittels der Scheinwerfer und/oder Scheinwerferabdeckungen insbesondere von Baustellenfahrzeugen sicher geschützt werden können, ohne dass dadurch die Straßenverkehrszulassung der Baustellenfahrzeuge gefährdet wird.

Diese Aufgabe wird mit den Merkmalen des Hauptanspruchs gelöst. Vorteilhafte Weiterbildungen der Erfindung sind den Unteransprüchen und der folgenden Beschreibung zu entnehmen.

Die Erfindung betrifft einen Gegenstand mit den Merkmalen des Hauptanspruchs und schafft insbesondere eine Scheinwerfer-Schutzgitter-Anordnung für ein Kraftfahrzeug, vorzugsweise ein Baustellenfahrzeug, z. B. ein Baustellenlastkraftwagen. Die Scheinwerfer-Schutzgitter-Anordnung umfasst ein erstes Schutzgitter zum Schutz eines Scheinwerfers und/oder einer Scheinwerferabdeckung des Kraftfahrzeugs und zeichnet sich insbesondere durch ein zweites Schutzgitter zum Schutz des Scheinwerfers und/oder der Scheinwerferabdeckung aus. Die Scheinwerfer-Schutzgitter-Anordnung stellt somit eine Kombinations- oder Dual-Scheinwerfer-Schutzgitter-Anordnung dar.

Die Scheinwerfer-Schutzgitter-Anordnung weist vorzugsweise eine Befestigungseinrichtung auf, die zur Montage an das Kraftfahrzeug dient und zweckmäßig ausgeführt ist, um das erste Schutzgitter zu befestigen, vorzugsweise lösbar und/oder schwenkbar. Es ist möglich, dass die Befestigungseinrichtung zusätzlich zur lösbaren Befestigung des zweiten Schutzgitters ausgeführt ist.

Es ist möglich, dass die Befestigungseinrichtung so ausgeführt ist, dass im montierten Zustand das erste Schutzgitter und das zweite Schutzgitter übereinander angeordnet sind und zwar vorzugsweise so, dass das erste Schutzgitter ein unteres Schutzgitter und das zweite Schutzgitter ein oberes Schutzgitter darstellt.

Die Befestigungseinrichtung wird vorzugsweise durch mehrere Clipsverbindungen (z. B. Rast-, Schnapp- oder Klemmverbindungen) ausgebildet. Die einzelnen Clipsverbindungen dienen zweckmäßig zum elastischen und/oder lösbaren Einclipsen des ersten Schutzgitters und/oder des zweiten Schutzgitters und stellen somit vorzugsweise Rast-, Schnapp- oder Klemmelemente dar. Die Clipsverbindung sind vorzugsweise Kunststoff-Clipsverbindungen.

Es ist möglich, dass zumindest eine Clipsverbindung auf der einen Seite des ersten Schutzgitters angeordnet und ausgeführt ist, um das erste Schutzgitter und/oder das zweite Schutzgitter zwischen einem geschlossenen Zustand, in dem der Scheinwerfer und/oder die Scheinwerferabdeckung geschützt werden, und einem geöffneten Zustand, in dem ein Zugriff auf den Scheinwerfer und/oder die Scheinwerferabdeckung möglich ist, schwenkbar zu halten. Zumindest eine Clipsverbindung ist zweckmäßig auf der anderen Seite des ersten Schutzgitters angeordnet und ausgeführt, um das erste Schutzgitter und/oder das zweite Schutzgitter im geschlossenen Zustand zu fixieren.

Das erste Schutzgitter und das zweite Schutzgitter umfasst vorzugsweise eine gitterfreie Aussparung für eine Scheinwerferreinigungsanlage, so dass das erste Schutzgitter und/oder das zweite Schutzgitter für den Betrieb mit einer Scheinwerferreinigungsanlage geeignet ist.

Es ist möglich, dass die Gitterabstände des ersten Schutzgitters größer sind als die Gitterabstände des zweiten Schutzgitters und das zweite Schutzgitter somit zweckmäßig engmaschiger ist als das erste Schutzgitter.

Es ist ferner möglich, dass sich im montierten Zustand die Gitterstäbe des ersten Schutzgitters und die Gitterstäbe des zweiten Schutzgitters zur Erzeugung einer engmaschigen Schutzgitterkonfiguration kreuzen.

Zu erwähnen ist noch, dass das erste Schutzgitter vorzugsweise straßenzugelassen (homologiert) ist, während das zweite Schutzgitter vorzugsweise nur für den Baustelleneinsatz und nicht zur Verwendung auf öffentlichen Straßen gedacht ist.

Die Erfindung ist nicht auf eine Scheinwerfer-Schutzgitter-Anordnung beschränkt, sondern umfasst auch ein Kraftfahrzeug, vorzugsweise ein Baustellenfahrzeug, z. B. einen Baustellenlastkraftwagen, mit einer Scheinwerfer-Schutzgitter-Anordnung wie hierin beschrieben.

Die oben beschriebenen Ausführungsformen der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine perspektivische Ansicht einer Scheinwerfer-Schutzgitter-Anordnung gemäß einer Ausführungsform der Erfindung mit noch nicht montiertem zweiten Schutzgitter,
- Figur 2: zeigt eine perspektivische Ansicht der Scheinwerfer-Schutzgitter-Anordnung der Figur 2 mit montiertem zweiten Schutzgitter und
- Figur 3: zeigt eine perspektivische Ansicht der Scheinwerfer-Schutzgitter-Anordnung der Figuren 1 und 2 mit erstem Schutzgitter in geöffnetem Zustand und abgenommenen zweiten Schutzgitter.

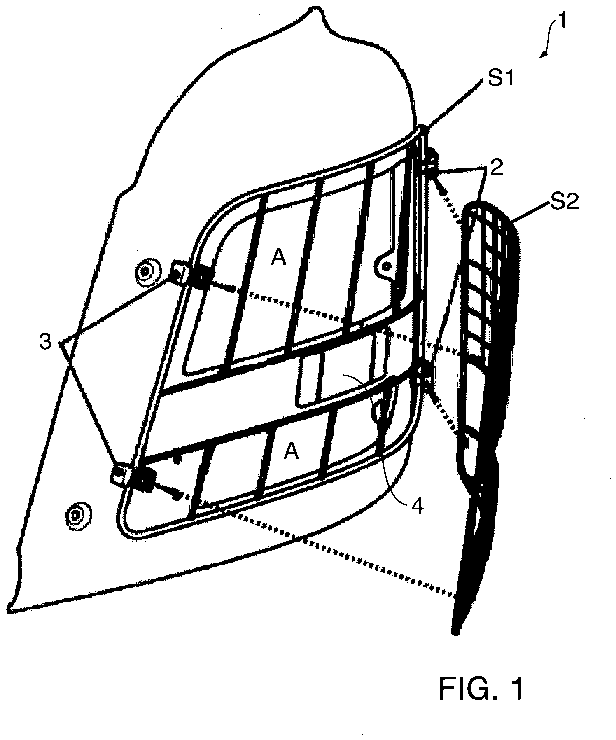

Figur 1 zeigt eine perspektivische Ansicht eines Teils eines Kraftfahrzeugs, insbesondere eines Baustellenfahrzeugs, und einer Scheinwerfer-Schutzgitter-Anordnung 1 gemäß einer Ausführungsform der Erfindung. Das Kraftfahrzeug umfasst eine obere Scheinwerferaussparung für einen oberen Scheinwerfer und eine untere Scheinwerferaussparung für einen unteren Scheinwerfer. Die Scheinwerfer sind wie üblich hinter einer Scheinwerferabdeckung A, z. B. einer durchsichtigen Kunststoff- oder Glasscheibe, angeordnet.

Die Scheinwerfer-Schutzgitter-Anordnung 1 umfasst ein erstes Schutzgitter S1 und ein zweites Schutzgitter S2 zum Schutz der Scheinwerfer und der Scheinwerferabdeckung A. Figur 1 zeigt das erste Schutzgitter S1 in einem geschlossenen Zustand, in dem das Schutzgitter S1 die Scheinwerfer und die Scheinwerferabdeckung A schützt, und das zweite Schutzgitter S2 in noch nicht montiertem Zustand.

Die Scheinwerfer-Schutzgitter-Anordnung 1 umfasst zudem eine Befestigungseinrichtung 2, 3, die einerseits zur Montage an das Kraftfahrzeug dient und andererseits zum lösbaren Befestigen des ersten Schutzgitters S1 und des zweiten Schutzgitters S2 dient.

Die Befestigungseinrichtung 2, 3 wird durch insgesamt vier Clipsverbindungen ausgebildet. Zwei Clipsverbindungen 2 sind auf der einen Seite des ersten Schutzgitters S1 angeordnet und ausgeführt, um das erste Schutzgitter S1 zwischen einem geschlossenen Zustand und einem geöffneten Zustand schwenkbar zu halten. Zwei Clipsverbindungen 3 sind auf der anderen Seite des ersten Schutzgitters S1 angeordnet und ausgeführt, um das erste Schutzgitter S1 in geschlossenem Zustand zu fixieren.

Die einzelnen Clipsverbindungen 2, 3 sind zusätzlich zum lösbaren Befestigen des zweiten Schutzgitters S2 ausgeführt. Das heißt insbesondere, dass an jeder Clipsverbindung 2, 3 sowohl das erste Schutzgitter S1 als auch das zweite Schutzgitter S2 halterbar sind.

Die Clipsverbindungen 2, 3 sind zum lösbaren, elastischen Einklemmen des ersten Schutzgitters S1 und des zweiten Schutzgitters S2 ausgeführt und stellen somit zweckmäßig lösbare Rast-, Einklemm- oder Schnappelemente dar.

Das Bezugszeichen 4 kennzeichnet eine Scheinwerferreinigungsanlage zur Reinigung der Scheinwerferabdeckung A.

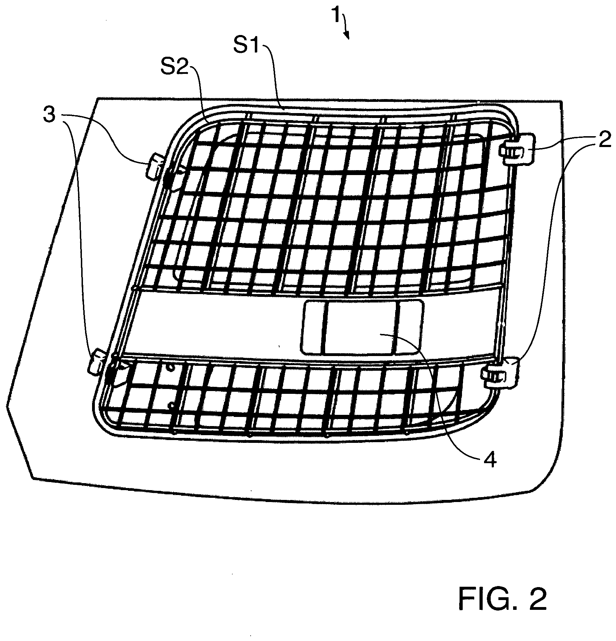

Figur 2 zeigt eine perspektivische Ansicht der Scheinwerfer-Schutzgitter-Anordnung 1 aus Figur 1 in vollständig montiertem Zustand.

Das erste Schutzgitter S1 ist unter dem zweiten Schutzgitter S2 angeordnet und zwar so, dass sich die Gitterstäbe des ersten Schutzgitters S1 und des zweiten Schutzgitters S2 kreuzen, um eine engmaschigere Schutzgitterkonfiguration zu bilden.

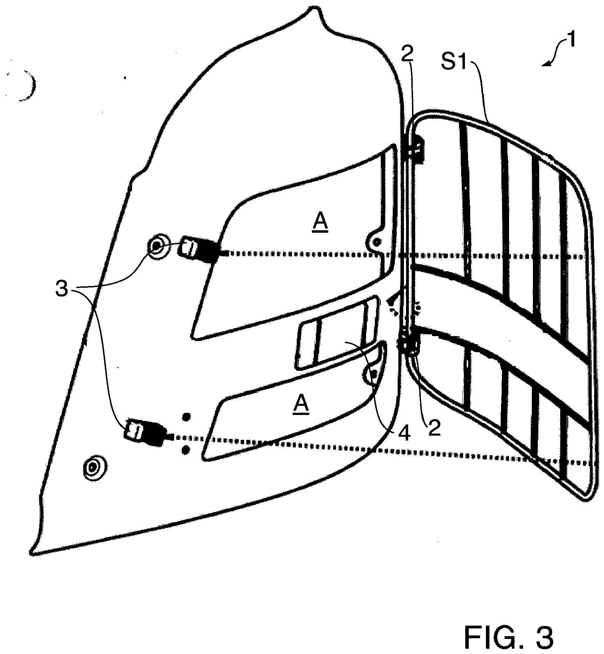

Das Schutzgitter S1 und das Schutzgitter S2 weisen zudem eine gitterfreie Aussparung auf, die dafür sorgen, dass in montiertem Zustand des ersten Schutzgitters S1 und des zweiten Schutzgitters S2 die Scheinwerferreinigungsanlage 6 gitterfrei freigelegt wird. Figur 3 zeigt eine perspektivische Ansicht der Scheinwerfer-Schutzgitter-Anordnung 1 der Figuren 1 und 2, allerdings mit abgenommenem zweiten Schutzgitter S2 und dem Schutzgitter S1 in einem aufgeschwenkten, geöffneten Zustand, in dem ein Zugriff auf die Scheinwerferabdeckung A und die Scheinwerfer möglich ist.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche.

## Patentansprüche

1. Scheinwerfer-Schutzgitter-Anordnung (1) für ein Kraftfahrzeug, vorzugsweise Baustellenfahrzeug, mit:
- einem ersten Schutzgitter (S1) zum Schutz einer Scheinwerferabdeckung (A) und/oder eines Scheinwerfers,
wobei
- die Scheinwerfer-Schutzgitter-Anordnung (1) ein zweites Schutzgitter (S2) zum zusätzlichen Schutz der Scheinwerferabdeckung (A) und/oder des Scheinwerfers aufweist,
**dadurch gekennzeichnet, dass**
- das erste Schutzgitter (S1) und das zweite Schutzgitter (S2) eine gitterfreie Aussparung für eine Scheinwerferreinigungsanlage (4) aufweisen und somit für den Betrieb mit einer Scheinwerferreinigungsanlage (4) ausgeführt sind, und/oder
- die Scheinwerfer-Schutzgitter-Anordnung (1) eine Befestigungseinrichtung (2, 3) aufweist, die zur Montage an das Kraftfahrzeug dient und ausgeführt ist, um das erste Schutzgitter (S1) und das zweite Schutzgitter (S2) lösbar und/oder schwenkbar zu befestigen, wobei die Befestigungseinrichtung (2, 3) durch mehrere Clipsverbindungen ausgebildet wird und zumindest eine Clipsverbindung (2) auf der einen Seite des ersten Schutzgitters (S1) angeordnet und ausgeführt ist, um das erste Schutzgitter (S1) und/oder das zweite Schutzgitter (S2) zwischen einem geschlossenen Zustand und einem geöffneten Zustand schwenkbar zu halten.

2. Scheinwerfer-Schutzgitter-Anordnung (1) nach Anspruch 1, **dadurch gekennzeichnet, dass** die Befestigungseinrichtung (2, 3) so ausgeführt ist, dass im montierten Zustand das erste Schutzgitter (S1) und das zweite Schutzgitter (S2) übereinander angeordnet sind.

3. Scheinwerfer-Schutzgitter-Anordnung (1) nach einem der vorhergehenden Ansprüche, **dadurch gekennzeichnet, dass** im montierten Zustand das erste Schutzgitter (S1) ein unteres Schutzgitter und das zweite Schutzgitter (S2) ein oberes Schutzgitter darstellt.

4. Scheinwerfer-Schutzgitter-Anordnung (1) nach einem der vorhergehenden Ansprüche, **dadurch gekennzeichnet, dass** die einzelnen Clipsverbindungen (2, 3) zur lösbaren Befestigung des ersten Schutzgitters (S1) und zusätzlich des zweiten Schutzgitters (S2) ausgeführt sind.

5. Scheinwerfer-Schutzgitter-Anordnung (1) nach einem der vorhergehenden Ansprüche , **dadurch gekennzeichnet, dass** die Clipsverbindungen (2, 3) zur lösbaren Befestigung des ersten Schutzgitters (S1) und/oder des zweiten Schutzgitters (S2) elastisch ausgeführt sind.

6. Scheinwerfer-Schutzgitter-Anordnung (1) nach einem der vorhergehenden Ansprüche , **dadurch gekennzeichnet, dass** zumindest eine Clipsverbindung (3) auf der anderen Seite des ersten Schutzgitters (S1) angeordnet und ausgeführt ist, um das erste Schutzgitter (S1) und/oder das zweite Schutzgitter (S2) im geschlossenen Zustand zu fixieren.

7. Scheinwerfer-Schutzgitter-Anordnung (1) nach einem der vorhergehenden Ansprüche, **dadurch gekennzeichnet, dass** die Gitterabstände des ersten Schutzgitters (S1) größer sind als die Gitterabstände des zweiten Schutzgitters (S2).

8. Scheinwerfer-Schutzgitter-Anordnung (1) nach einem der vorhergehenden Ansprüche, **dadurch gekennzeichnet, dass** sich im montierten Zustand die Gitterstäbe des ersten Schutzgitters (S1) und die Gitterstäbe des zweiten Schutzgitters (S2) kreuzen.

9. Kraftfahrzeug, vorzugsweise Baustellenfahrzeug, mit einer Scheinwerfer-Schutzgitter-Anordnung (1) nach einem der vorhergehenden Ansprüche.

## Claims

1. A headlight protection grid arrangement (1) for a motor vehicle, preferably a construction site vehicle, having:
- a first protection grid (S1) for protection of a headlight cover (A) and/or a headlight,
wherein
- the headlight protection grid arrangement (1) has a second protection grid (S2) for additional protection of the headlight cover (A) and/or the headlight, **characterized in that**
- the first protection grid (S1) and the second protection grid (S2) have a grid-free recess for a headlight cleaning installation (4) and are consequently constructed for operation with a headlight cleaning installation (4), and/or
- the headlight protection grid arrangement (1) has a securing device (2, 3), which is used for assembly on the motor vehicle and is constructed in order to releasably and/or pivotably secure the first protection grid (S1) and the second protection grid (S2), wherein the securing device (2, 3) is formed by a plurality of clip-fit connections and at least one clip-fit connection (2) is arranged on the one side of the first protection grid (S1) and constructed in order to pivotably retain the first protection grid (S1) and/or the second protection grid (S2) between a closed state and an open state.

2. The headlight protection grid arrangement (1) according to Claim 1, **characterized in that** the securing device (2, 3) is constructed in such a manner that, in the assembled state, the first protection grid (S1) and the second protection grid (S2) are arranged one above the other.

3. The headlight protection grid arrangement (1) according to any one of the preceding claims, **characterized in that**, in the assembled state, the first protection grid (S1) constitutes a lower protection grid and the second protection grid (S2) constitutes an upper protection grid.

4. The headlight protection grid arrangement (1) according to any one of the preceding claims, **characterized in that** the individual clip-fit connections (2, 3) are constructed for releasably securing the first protection grid (S1) and in addition the second protection grid (S2).

5. The headlight protection grid arrangement (1) according to any one of the preceding claims, **characterized in that** the clip-fit connections (2, 3) are resiliently constructed for releasably securing the first protection grid (S1) and/or the second protection grid (S2) .

6. The headlight protection grid arrangement (1) according to any one of the preceding claims, **characterized in that** at least one clip-fit connection (3) is arranged at the other side of the first protection grid (S1) and constructed in order to fix the first protection grid (S1) and/or the second protection grid (S2) in the closed state.

7. The headlight protection grid arrangement (1) according to any one of the preceding claims, **characterized in that** the grid spacings of the first protection grid (S1) are greater than the grid spacings of the second protection grid (S2).

8. The headlight protection grid arrangement (1) according to any one of the preceding claims, **characterized in that**, in the assembled state, the grid bars of the first protection grid (S1) and the grid bars of the second protection grid (S2) intersect.

9. A motor vehicle, preferably a construction site vehicle, having a headlight protection grid arrangement (1) according to any one of the preceding claims.

## Revendications

1. Arrangement de grilles de protection pour phare (1) pour un véhicule automobile, de préférence un véhicule de chantier, comprenant :
- une première grille de protection (S1) destinée à protéger un capot de phare (A) et/ou un phare,
- l'arrangement de grilles de protection pour phare (1) possédant une deuxième grille de protection (S2) servant à la protection supplémentaire du capot de phare (A) et/ou du phare,
**caractérisé en ce que**
- la première grille de protection (S1) et la deuxième grille de protection (S2) possèdent un évidement exempt de grille pour un équipement de nettoyage de phare (4) et sont ainsi réalisées pour le fonctionnement avec un équipement de nettoyage de phare (4), et/ou
- l'arrangement de grilles de protection pour phare (1) possède un dispositif de fixation (2, 3) qui sert au montage sur le véhicule automobile et qui est réalisé pour fixer la première grille de protection (S1) et la deuxième grille de protection (S2) de manière amovible et/ou pivotante, le dispositif de fixation (2, 3) étant formé par plusieurs liaisons par enclipsage et au moins une liaison par enclipsage (2) étant disposée d'un côté de la première grille de protection (S1) et réalisée pour maintenir la première grille de protection (S1) et/ou la deuxième grille de protection (S2) pivotante entre un état fermé et un état ouvert.

2. Arrangement de grilles de protection pour phare (1) selon la revendication 1, **caractérisé en ce que** le dispositif de fixation (2, 3) est réalisé de telle sorte que dans l'état monté, la première grille de protection (S1) et la deuxième grille de protection (S2) sont disposées l'une au-dessus de l'autre.

3. Arrangement de grilles de protection pour phare (1) selon l'une des revendications précédentes, **caractérisé en ce que** dans l'état monté, la première grille de protection (S1) représente une grille de protection inférieure et la deuxième grille de protection (S2) représente une grille de protection supérieure.

4. Arrangement de grilles de protection pour phare (1) selon l'une des revendications précédentes, **caractérisé en ce que** les liaisons par enclipsage (2, 3) individuelles sont réalisées pour la fixation amovible de la première grille de protection (S1) et en plus de la deuxième grille de protection (S2).

5. Arrangement de grilles de protection pour phare (1) selon l'une des revendications précédentes, **caractérisé en ce que** les liaisons par enclipsage (2, 3) sont réalisées élastiques pour la fixation amovible de la première grille de protection (S1) et/ou de la deuxième grille de protection (S2).

6. Arrangement de grilles de protection pour phare (1) selon l'une des revendications précédentes, **caractérisé en ce qu'**au moins une liaison par enclipsage (3) est disposée sur l'autre côté de la première grille de protection (S1) et réalisée pour bloquer la première grille de protection (S1) et/ou la deuxième grille de protection (S2) dans l'état fermé.

7. Arrangement de grilles de protection pour phare (1) selon l'une des revendications précédentes, **caractérisé en ce que** les pas de grille de la première grille de protection (S1) sont supérieurs aux pas de grille de la deuxième grille de protection (S2).

8. Arrangement de grilles de protection pour phare (1) selon l'une des revendications précédentes, **caractérisé en ce que** dans l'état monté, les barreaux de grille de la première grille de protection (S1) et les barreaux de grille de la deuxième grille de protection (S2) se croisent.

9. Véhicule automobile, de préférence un véhicule de chantier, comprenant un arrangement de grilles de protection pour phare (1) selon l'une des revendications précédentes.
